# EUROPEAN PATENT SPECIFICATION

(11) **EP 0 735 813 B1**
(45) Date of publication and mention of the grant of the patent: **25.07.2001**
(21) Application number: 94927501.0
(22) Date of filing: 25.08.1994
(51) Int. Cl.: A01G 9/10

(54) **AN ENCLOSURE FOR GROWING A PLANT PORTION**
GEHÄUSE ZUM WACHSEN EINES PFLANZENTEILES
ENCEINTE SERVANT A LA CROISSANCE D'UNE PARTIE D'UNE PLANTE

(30) Priority: 25.08.1993 IE 930625
(43) Date of publication of application: 09.10.1996
(73) Proprietor: Higgins, John, F., Stillorgan, County Dublin (IE)
(72) Inventor: HIGGINS, John F., Stillorgan, County Dublin (IE); DOUGLAS, Gerard, Dublin 5 (IE)
(74) Representative: Casey, Lindsay Joseph
(86) International application number: EP9402818
(87) International publication number: WO9505730

(56) References cited:
- EP-A- 0 021 963
- AU-B- 539 476
- FR-A- 2 576 745
- GB-A- 2 057 234
- GB-A- 2 108 813

## Description

This invention relates to the provision of an enclosure for growing a plant portion. Enclosure of a growing plant portion may be used to facilitate a particular growing environment by the inclusion or exclusion of desired or undesired substances. For example, an enclosure of this kind may be used for applying insecticides, herbicides, fungicides, growth regulators, poultices or the like to a plant portion. Enclosure of a growing plant portion is particularly used in layering.

Layering is a plant propagation technique in which a quantity of a rooting substrate is held in position around a growing plant stem or other plant organ while attached to a growing plant within a substantially sealed enclosed region for the purpose of inducing the formation of roots within the enclosed region. When adequate root growth has been achieved, the stem or plant organ may be removed or separated from the remainder of the growing plant and potted or otherwise planted out.

It is known in the layering technique to place an appropriate quantity of a rooting substrate such as sphagnum moss, peat moss, rock wool, compost, or any other suitable substrate around the plant stem or organ and hold this in position surrounding the plant stem or other plant organ by virtue of the substrate being enclosed. The technique may be applied to any plant species and is used in horticulture, forestry and botany. In one method of layering smaller plants, the stem is girdled, i.e. wounded, over a linear distance of approximately one inch, to foment root formation above the cut. A ball of slightly damp sphagnum moss is then placed around the girdled section. A portion of suitably clean polyethylene film is then wrapped around the sphagnum moss and tied to the stem at each end where the stem projects out of or extends from the enclosed region. After a suitable period, root growth develops on the enclosed stem and the roots may be seen through the clear polyethylene plastics covering. At this stage, the layer may be removed from the parent plant and potted by severing the stem where it joins a main stem of the plant. The separated stem together with the root structure which has developed on it is then planted out or potted. The sheet of plastics excludes air, rain, pests and any other agents which may adversely effect rooting and provides an appropriate enclosed environment for the development of root growth. An approximate period sufficient for adequate root growth is one month. The moisture initially contained in the body of rooting substrate is sufficient to engender the required growth. The wrapping of plastics material is sealed off at each end by string or tape to ensure an appropriately sealed closed environment within the wrapping.

Layering is of particular advantage for the propagation of plants where independent slips would be slow to root. It can be used for house plants, fruit trees, forest trees and ornamental trees. For outdoor use, in particular with trees, an alternative system of layering is to bend over a branch and to hold a portion of the branch between its point of divergence from the main trunk and its free end in contact with the earth. This portion is then covered over with soil and root growth is thereby induced at the point where the branch is covered by the soil. Disadvantages of this method are that it is relatively labour-intensive and requires the application of a significant amount of physical effort to achieve the desired result. In addition, it is inappropriate for plants having brittle stems.

An enclosure according to the precharacterising part of claim 1 is described in patent specification AU-B-539476. However, in that case the enclosure comprises two semi-rigid shells hinged together along an integral fold line, each shell having localised corrugated formations at each end which are spaced from the fold line and can resiliently deform around a plant stem. This prior enclosure is of relatively complex construction and its internal volume is fixed.

According to the invention, there is provided an enclosure for growing a plant portion having the features of claim 1.

An embodiment of the invention will now be described having regard to the accompanying drawings, figures 1 to 15 showing enclosures forming a background art, in which:
Figure 1 is a pictorial representation of a plant portion during layering,
Figure 2 is a pictorial representation of a first enclosure for growing a plant portion,
Figure 3 is a side view of the enclosure of Figure 2 in a closed condition,
Figure 4 is an end view of the enclosure of Figures 2 and 3 in the closed condition,
Figure 5 shows a strap arrangement for application to the enclosure of Figures 2 to 4 in side and end views,
Figure 6 shows an alternative strap arrangement in top and end views,
Figure 7 shows a second enclosure for growing a plant portion, in an open condition.
Figure 8 is a pictorial representation of the enclosure of Figure 7 in a closed condition,
Figure 9 shows a dished end configuration of an enclosure in pictorial and side sectional views,
Figure 10 shows a further enclosure having three plant stem apertures,
Figure 11 shows a further enclosure having an integral hinge,
Figure 12 shows an enclosure comprises two chambers,
Figure 13 shows an alternative two chamber enclosure,
Figures 14 and 15 show a further alternative enclosure having two separate chambers which may be opened and closed independently of each other, in open and closed configurations respectively,
Figure 16 shows an embodiment of an enclosure according to the invention in a pictorial view, in an open condition, and
Figure 17 is a pictorial view representation of the embodiment of Figure 16 in a closed condition.

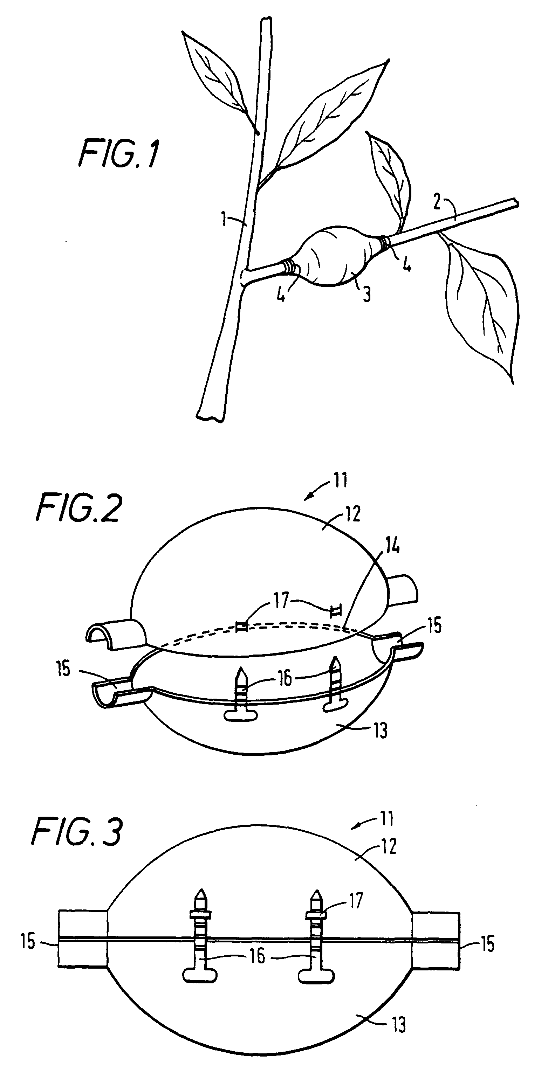

As shown in Figure 1, a plant undergoing a layering process has a main stem 1 and a shoot 2 extending from the main stern 1 on which new root growth is undergoing development. A quantity of a rooting medium has been enclosed within a portion of wrapping material 3 and the wrapping material 3 has been sealed and held in a closed condition onto the stem or shoot 2 by means of tape or swing 4. The layering process proceeds as already described above.

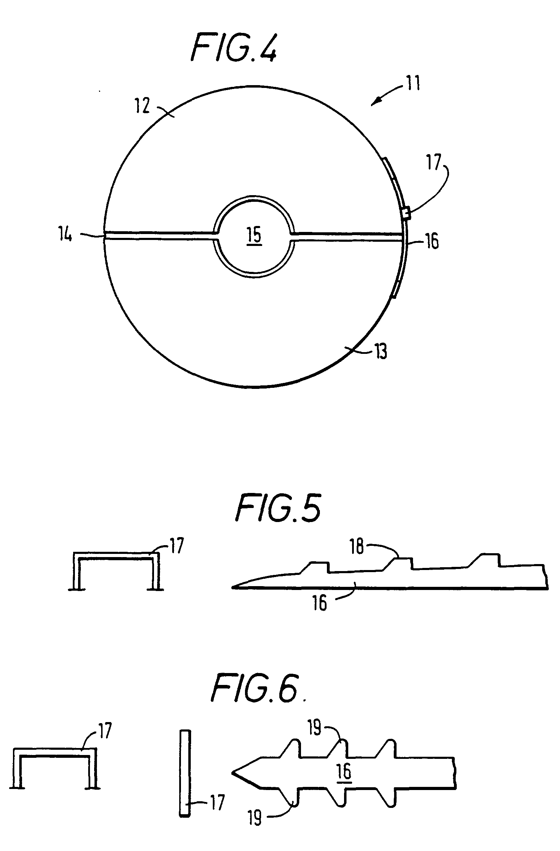

An enclosure substitutes for the wrapping material 3 of Figure 1. The enclosure 11 is shown in pictorial representation in Figure 2 in a partially open condition and in Figures 3 and 4 in a closed condition. The enclosure consists of a hard or partly resilient shell structure having an upper part 12 and a lower part 13 connected together by hinges 14 or along a suitable hinge line for opening and closing in a clam-shell-type manner. End apertures 15 are provided at each generally longitudinal end of the unit 11 for the passage of a shoot or stem 2. In the closed condition, the enclosure 11 is held together by a strap or buckle arrangement 16 fixedly attached to the lower part 13 and extending from this part to engage in clips 17 mounted on the upper part 12. It will be appreciated that while the terms upper and lower are used in connection with the description of the drawings, this wording has no particular currency or limitation in respect of use of the invention and is merely a matter of descriptive convenience. It will be further appreciated that while two engaging straps and clips are shown in the representations of Figures 2 and 3, a greater or lesser number may be used as appropriate or required. It will be further apparent that the engaging edges of the enclosure may also be provided with flanging or an overlapping feature as required, to ensure suitable sealing of the region within the enclosure.

Figures 5 and 6 show possible strap arrangements especially suited to one-way type use where removal of the enclosure is achieved by cutting through the straps rather than by their release in a reusable manner. As shown in Figure 5, the strap 16 is provided with barbs or non-return projections 18 on its upper face, for engagement within the bridge-type clip portion 17. In the alternative arrangement of Figure 6, the strap portion 16 is provided with laterally extending or side barbs 19, which engage in a non-releasable manner with the lateral upright portions of the bridge-type clip member 17.

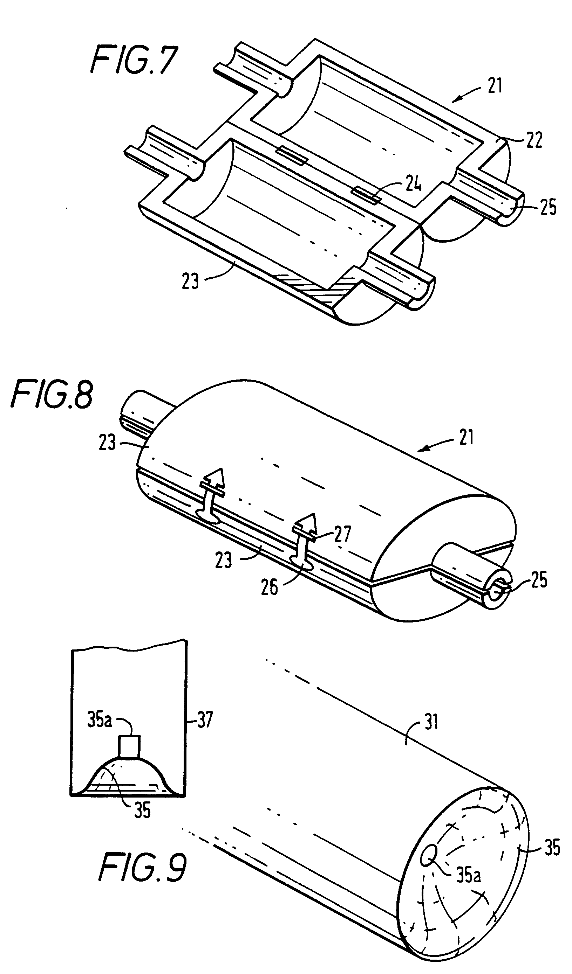

An alternative enclosure is shown in Figures 7 and 8, in which the enclosure 21 again has first and second parts 22 and 23 and is closable along a hinge line 24, on which actual hinges may be defined or provided as appropriate. End apertures 25 are again present and the unit is held in its closed condition by straps 26 and clips 27. The difference from the enclosure 11 of Figure 2 to 4 resides in the alternative internal cross-section of the hollow space defined within the structure, which in this instance is substantially elliptically cylindrical, i.e. an elongate cylinder of elliptical cross-section.

Figure 9 shows a variant on the enclosure of Figures 7 and 8. in which dished ends 35 are provided and the apertures 35a are located substantially centrally at the innermost region of the dished regions. This particular construction may be employed with the elliptical cross-section of Figures 7 and 8. The particular advantage of the arrangement shown is that the enclosure 31 may itself define a growing pot for the separated shoot or slip following completion of the layering phase, by virtue of the enclosure 31 being able to stand upright on its dished end 35 due to this defining a base plane for upright orientation of the unit. Thus it is not necessary to initially remove the enclosure from the rooted shoot until such time as further growth takes place. Alternatively, if the enclosure is formed from a biodegradable material, the entire enclosure may be placed in the soil for continued growth of the layered shoot.

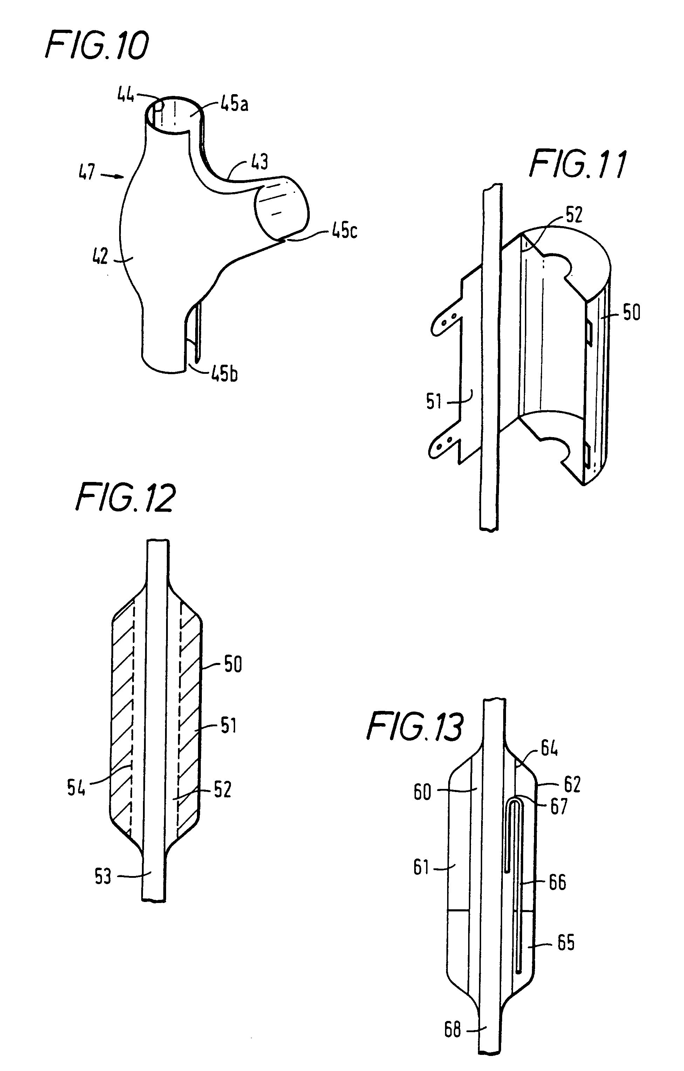

Figure 10 shows a junction-type structure having three apertures, the enclosure 41 again having first and second parts 42 and 43 respectively, opening along a hinge line or hinge structure 44. In this instance, three apertures are provided, 45a, 45b and 45c, so that layering can be engendered at the junction of two plant shoots and separation can then take place in any desired manner.

Figure 11 shows a unitary D-shaped enclosure. A substantially semi-cylindrical enclosure or casing portion 50 and a substantially flat planar portion 51 are connected by means of an integral hinge portion 52. The enclosure is suitably made of plastics material which allows flexibility about the hinge line 52, while the device remains a substantially unitary structure. This enclosure may typically be applied to a plant which is supported by or fixed to a wall or other support, so that flat surface 51 may be engaged against or located in juxtaposition to, the wall or other flat surface.

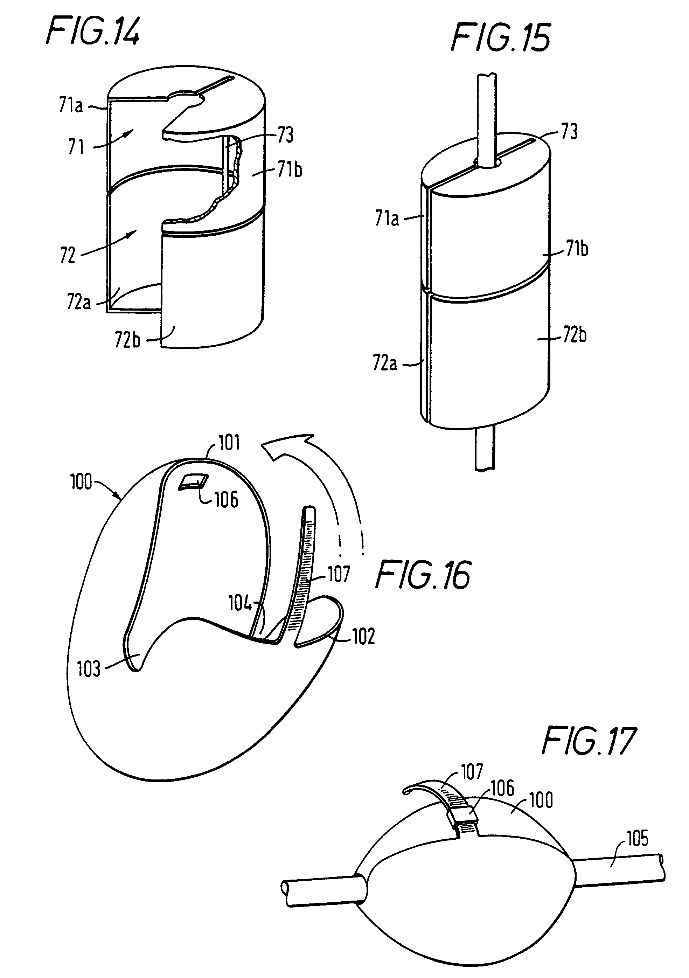

Alternatively, as will be described below with reference to the embodiment of the invention illustrated in Fig. 16 and 17, the enclosure comprises a sheet of deformable plastics or other material which is deformable about a plant portion to define an enclosed region and retained in its closed or enclosure - defining condition by straps or other means as already described herein. In this embodiment, the enclosure may suitably be formed entirely from a bio-degradable substrate material for use in layering, or from an absorbent material for use in applying growth regulating chemicals.

In addition to layering, the enclosure may also be used as a vehicle for the treatment of plants, particularly for applying insecticides, herbicides, growth regulators and the like. In general the enclosure may be used to facilitate a particular growing environment by the inclusion or exclusion of specific substances or materials.

The enclosure shown in Figure 12 comprises an outer shell 50 substantially similar to the enclosure 11 described with reference to Figures 2 and 3, the internal volume of which is divided into a plurality of communicating chambers 51, 52. The chambers 51, 52 are delimited by a perforated barrier 54 or membrane-like material. Typically the outer chamber 51 may contain an absorbent material soaked in a growth regulating solution or the like, to be administered to the plant part 53 enclosed in the device. The solution diffuses through the perforated barrier or membrane 54 and onto the plant part 53, or alternatively it may be applied by squeezing the exterior so that the solution is forced through the barrier/membrane 54 and onto the plant.

Figure 13 shows a similar enclosure with an inner chamber 60 and an outer chamber 61. The outer chamber 61 defined by the outer shell 62 and the impermeable barrier 64 forms a reservoir for holding the desired solution 65. Passage of the solution from the outer chamber 61 to the inner chamber 60 and thus onto the plant portion 65 is achieved by means of tube 66 which links both chambers 60, 61 through an aperture 67. By applying pressure to the exterior of the enclosure the solution is forced up through tube 66 and into the inner chamber 60 where it comes into contact with the plant part 68.

Figures 14 and 15 show a further enclosure comprising two chambers 71 and 72 displaced axially along a common spine 73. Each of the enclosures 71 and 72 may be opened and closed independently of the other by hinging action of chamber clam-shell type portions 71a, 71b and 72a, 72b about a pivot axis defined by spine 73.

Figures 16 and 17 each shows an embodiment of the invention in which the enclosure consists of an injection moulded sphere-like skin or case 100 which, as will be observed from Figure 16 is capable of being in an open condition or, as in the case of Figure 17, is capable of being in a closed condition. As will be observed in Figure 16 when in the open condition the skin 100 essentially comprises an open-mouthed structure capable of receiving the stem of a plant. The open-mouthed structure has lips 101, 102 such that at the pivotal junctions of the lips 101, 102, respective apertures 103, 104 are formed when the lips 101,102 are closed which apertures can accommodate the stem 105 of the plant. Preferably, the stem is previously prepared and treated with, for example, a hormone growth promoter and enclosed with a layer of damp growing medium such as sphagnum moss or similar.

The skin or case 100 is preferably non-permeable and is capable of sealing around stems of from 8.0 to 15.0mm in diameter without causing undue pressure on larger sizes such as to damage the bark of the stem. The skin can be installed rapidly and easily (without the need for training); is of atractive appearance, and is sympathetic to the garden and natural environment.

To maintain the case 100 in the closed condition there is provided integrally near the lip 101 a bridge type clip portion 106; integral with and projecting from the lip 102 is a clasp-like sizucture or strap 107 provided with non-return projections for engagement with the portion 106. Alternatively, in place of the clip portion, there is provided a locking top (not shown) engageable with a long buckle (not shown) which is in place of the strap 107.

Use of the invention for layering essentially parallels the known layering technique, save only that the wrapping operation of the known system is substituted by use of the sealable enclosure of the present invention. An appropriate body of rooting substrate is placed within the enclosure which is then closed about the desired region of the plant stem. No end sealing operation is necessary and root growth takes place in the customary manner. After lapse of an appropriate period, the enclosure may be removed if required, or alternatively it may serve as a pot or may be planted out together with the separated shoot, in the event of the enclosure being formed from a biodegradable material.

The enclosure of the invention may create a localised, mini-greenhouse effect around the enclosed shoot. Thus the shoot is not exposed to elements of the weather and more rapid growth may be induced.

The enclosure may also be used to study plant growth under different conditions by including or excluding particular elements such as certain insects or gases, insecticides, herbicides, growth regulators or the like and altering the environment within the device.

Prior to enclosure, the part of the stem where root formation is required may be either wounded or treated with root-inducing chemicals. Such treatment may also take place at any stage during the period of enclosure, so that the enclosure may be temporarily opened for access to the substrate.

## Claims

1. An enclosure for growing a plant portion, comprising a case (100) formed from a single sheet of material and having an open configuration in which the case has an open mouth with opposing lips (101, 102) for placement of a plant stem (105) within the case (100) between the lips, and a closed configuration in which the case has a bulbous shape with entrance and exit apertures (103, 104) for passage of the plant stem (105) into and out of the case, characterised in that the case (100) is formed from a single substantially continuously curved sheet of deformable material which is closable to the closed configuration by deforming the sheet so that the lips are in an overlapping engagement, the junction of the lips (101, 102) in the closed configuration of the case (100) forming the entrance and exit apertures (103, 104) for the plant stem.

2. An enclosure as claimed in claim 1, wherein the case (100) is made of a bio-degradable material.

3. An enclosure as claimed in claim 1, wherein the case (100) is made of a non-permeable plastics material.

## Patentansprüche

1. Gefäß zum Kultivieren eines Pflanzenteils, umfassend ein Gehäuse (100), das aus einem einzigen Materialstück ist und eine offene Konfiguration, in der das Gehäuse eine offene Mündung mit einander gegenüberliegenden Lippen (101, 102) aufweist, um einen Pflanzenstiel (105) in dem Gehäuse (100) zwischen den Lippen zu platzieren, und eine geschlossene Konfiguration hat, in der das Gehäuse eine blumenzwiebelförmige Gestalt mit einer Eintritts- und einer Austrittsöffnung (103, 104) hat, so dass der Pflanzenstiel (105) in das Gehäuse ein- und aus diesem austreten kann, dadurch gekennzeichnet, dass das Gehäuse (100) aus einem einzelnen, im wesentlichen kontinuierlich gekrümmten Stück verformbarem Material gebildet ist, das zu der geschlossenen Konfiguration geschlossen werden kann, indem das Stück so verformt wird, dass sich die Lippen in einem Überlappungseingriff befinden, wobei der Übergang der Lippen (101, 102) in der geschlossenen Konfiguration des Gehäuses (10) die Ein- und Austrittsöffnungen (103, 104) für den Pflanzenstiel bildet.

2. Gefäß nach Anspruch 1, bei dem das Gehäuse (100) aus einem biologisch abbaubaren Material hergestellt ist.

3. Gefäß nach Anspruch 1, bei dem das Gehäuse (100) aus einem undurchlässigen Kunststoff hergestellt ist.

## Revendications

1. Enceinte pour faire pousser une partie de plante, comprenant une boîte (100) formée à partir d'une feuille unique de matière et ayant une configuration ouverte dans laquelle la boîte a une bouche ouverte avec des lèvres opposées (101, 102) pour placer une tige de plante (105) dans la boite (100) entre les lèvres, et une configuration fermée dans laquelle la boîte a une forme bulbeuse avec des ouvertures d'entrée et de sortie (103, 104) pour le passage de la tige de plante (105) dans et hors de la boîte, caractérisée en ce que la boîte (100) est formée à partir d'une feuille sensiblement continuellement courbe de matière déformable qui peut être fermée dans la configuration fermée en déformant la feuille de telle sorte que les lèvres s'engagent de manière chevauchante, la jonction des lèvres (101, 102) dans la configuration fermée de la boîte (100) formant les ouvertures d'entrée et de sortie (103, 104) pour la tige de plante.

2. Enceinte selon la revendication 1, dans laquelle la boîte (100) est réalisée en une matière biodégradable.

3. Enceinte selon la revendication 1, dans laquelle la boîte (100) est réalisée en une matière plastique non perméable.
